# EUROPEAN PATENT APPLICATION

(11) **EP 4 715 967 A1**
(43) Date of publication of application: **25.03.2026**
(21) Application number: 24843479.7
(22) Date of filing: 16.07.2024
(51) Int. Cl.: H01M 50/103, H01M 50/342, H01M 50/325, H01M 50/627, H01M 50/15

(54) **SECONDARY BATTERY**

(30) Priority: 17.07.2023 KR 20230092180
(71) Applicant: LG Energy Solution, Ltd., Seoul 07335 (KR)
(72) Inventor: YOON, Doo Han, Daejeon 34122 (KR); LEE, Jin Kyu, Daejeon 34122 (KR)
(74) Representative: Plasseraud IP
(86) International application number: PCT/KR2024/010178
(87) International publication number: WO 2025/018764

(57) **Abstract**

Disclosed is a secondary battery including: a stack-type electrode assembly including a plurality of unit cells stacked in a first direction, and having electrode leads at both ends in a second direction perpendicular to the first direction; a multifunctional terminal block (MTB) at both ends of the stack-type electrode assembly; and a laminate sheet wrapping around the sides of the stack-type electrode assembly, wherein the MTB includes: an inner housing, and a first assembly comprising an electrode terminal part stored in the inner housing and electrically connected to electrode leads of the stack-type electrode assembly; and an outer housing wrapping around at least a portion of the first assembly, and a second assembly comprising a rupture disk coupled to the outer housing and configured to rupture to release gas upon an increase in internal pressure.

## Description

### Cross-Reference to Related Applications

This application is a National Phase entry pursuant to 35 U.S.C. 371 of International Application PCT/KR2024/010178 filed July 16, 2024, which claims the benefit of priority from Korean Patent Application No. 10-2023-0092180, filed on July 17, 2023, the disclosures of which are incorporated herein by reference in their entirety.

### Technical Field

The present invention relates to a secondary battery, and more particularly to a secondary battery that is not only advantageous for realizing large cell capacities, but also for configuring battery packs due to its high degree of freedom and compatibility, and have improved safety.

### Background

Unlike primary batteries, secondary batteries can be charged and discharged multiple times. Secondary batteries are widely used as an energy source for a variety of wireless devices, including handsets, laptops, and cordless vacuum cleaners. In recent years, the primary use of secondary batteries has shifted from mobile devices to mobility, as energy density improvements and economies of scale have dramatically reduced the manufacturing cost per unit capacity of secondary batteries and increased the range of battery electric vehicles (BEVs) to be on par with fuel vehicles.

Meanwhile, the demand for large-capacity battery packs applied to electric vehicles is increasing. Large-capacity battery packs in automobiles are required to increase safety while increasing capacity.

The background description provided herein is for the purpose of generally presenting context of the disclosure. Unless otherwise indicated herein, the materials described in this section are not prior art to the claims in this application and are not admitted to be prior art, or suggestions of the prior art, by inclusion in this section.

### Summary

The technical problem of the present disclosure is to provide a secondary battery that is not only favorable for the implementing large cell capacities, but also favorable for the configuration of a battery pack due to its high degree of freedom and compatibility, and with improved safety.

To accomplish the above technical problem, the present disclosure provides a secondary battery including: a stack-type electrode assembly including a plurality of unit cells stacked in a first direction, and having electrode leads at both ends in a second direction perpendicular to the first direction; a multifunctional terminal block (MTB) at both ends of the stack-type electrode assembly; and a laminate sheet wrapping around the sides of the stack-type electrode assembly, wherein the MTB includes: a first assembly comprising an inner housing, and an electrode terminal part accommodated in the inner housing and electrically connected to the electrode leads of the stack-type electrode assembly; and a second assembly including an outer housing wrapping around at least a portion of the first assembly, and a rupture disk which is coupled to the outer housing and is configured to rupture to release gas upon an increase in internal pressure.

In some embodiments, the inner housing may include a second through-hole in communication with the rupture disk.

In some embodiments, a shield may be within the second through-hole.

In some embodiments, the MTB may further include a busbar electrically connecting the electrode leads of the stack-type electrode assembly with the electrode terminal part.

In some embodiments, the inner housing may include a middle body, wherein the middle body may support a bonding between the electrode lead and the busbar.

In some embodiments, the inner housing may include a bottom part, wherein the bottom part may be below the busbar and configured to prevent downward heat transfer.

In some embodiments, the inner housing may include an insulating material, and the outer housing may include a metallic material.

In some embodiments, the outer housing may include a terminal hole, wherein the electrode terminal part is exposed to outside through the terminal holes in the outer housing.

In some embodiments, the MTB may further include a check valve, and the check valve is configured to open to discharge internal gases when the internal pressure of the secondary battery is above a specific pressure, and to close again after the internal pressure is relieved.

In some embodiments, the MTB may further include an electrolyte inlet configured to receive an electrolyte injected therethrough.

Another aspect of the present disclosure provides a secondary battery including: a stack-type electrode assembly includes a plurality of unit cells is stacked in a first direction, and having electrode leads at both ends in a second direction perpendicular to the first direction; a multifunctional terminal block (MTB) at both ends of the stack-type electrode assembly; and a laminate sheet wrapping around the sides of the stack-type electrode assembly, wherein the MTB includes: a first assembly including an inner housing, and an electrode terminal part accommodated in the inner housing and the electrically connected to electrode leads of the stack-type electrode assembly; and a second assembly including an outer housing wrapping around at least a portion of the first assembly, and a check valve coupled to the outer housing, wherein the check valve may be configured to open to discharge internal gases when the internal pressure of the secondary battery is above a specific pressure, and to close again after the internal pressure is relieved.

In some embodiments, the second assembly may further include a seal member coupled to the outer housing and sealing a periphery of the electrode terminal part.

In some embodiments, the second assembly may further include: a rupture disk which is coupled to the outer housing and is configured to rupture to release gas upon an increase in internal pressure.

In some embodiments, the inner housing may include a second through-hole in communication with the rupture disk.

In some embodiments, a shield may be within the second through-hole.

Secondary batteries according to embodiments of the present disclosure are not only advantageous for implementing large cell capacities, but also for configuring battery packs due to their high degree of freedom and compatibility, and may have improved safety.

The effects that may be obtained from the exemplary embodiments of the present disclosure are not limited to those mentioned above, and other effects not mentioned may be clearly derived and understood by one of ordinary skill in the art to which the exemplary embodiments of the present disclosure belong from the following description. That is, unintended effects of practicing the exemplary embodiments of the present disclosure may also be derived from the exemplary embodiments of the present disclosure by one of ordinary skill in the art.

### Brief Description of the Drawings

FIG. 1 is a perspective view illustrating an essential part of a secondary battery according to one embodiment of the present disclosure.
FIG. 2 is a schematic perspective view showing the laminate sheet removed from the secondary battery in FIG. 1.
FIG. 3 is a perspective view of the coupling relationship of the first assembly and the second assembly comprising the first MTB in the secondary battery of FIG. 1.
FIG. 4 is a schematic view of the first MTB in the secondary battery of FIG. 1, viewed from a first direction.
FIG. 5 is a schematic diagram illustrating a cross-section of the first MTB cut through the electrode terminal part and in a plane perpendicular to the third direction.
FIG. 6 is a perspective view illustrating an essential part of a secondary battery in another embodiment of the present disclosure.
FIG. 7 is a partial perspective view illustrating a separate-and-couple structure of the first assembly and second assembly of the first MTB of the secondary battery of FIG. 6.
FIG. 8 is a diagram illustrating the first assembly of the secondary battery of FIG. 6.
FIG. 9 is a diagram illustrating the separation structure of the first assembly of the secondary battery of FIG. 6.
FIG. 10 is a diagram illustrating the first assembly of the secondary battery of FIG. 6 viewed from a second direction.
FIG. 11 is a perspective view of the second assembly of the secondary battery of FIG. 6.
FIG. 12 is a perspective view of the separation structure of the second assembly of the secondary battery of FIG. 6.
FIGS. 13 and 14 are perspective views of the first assembly and the second assembly coupled together.

### Detailed Description

Hereinafter, embodiments of the concept of the present disclosure will be described in detail with reference to the accompanying drawings. However, embodiments of the present disclosure may be modified in many other forms, and it should not be construed that the scope of the present disclosure is limited by the embodiments described below. It is preferred that the embodiments of the concept of the present disclosure be construed as being provided to more fully explain the inventive concept to one of ordinary skill in the art. Like designations generally refer to like elements. Furthermore, various elements and areas in the drawings are schematically depicted. Accordingly, the concept of the present disclosure is not limited by the relative sizes or spacing depicted in the accompanying drawings.

Terms such as "first," "second," and the like may be used to describe various components, but the components are not limited by such terms. These terms are used only for the purpose of distinguishing one component from another. For example, a first component may be named a second component, and vice versa, a second component may be named a first component, without departing from the scope of the concept of the present disclosure.

The terms used in this application is used to describe certain embodiments only and is not intended to limit the concept of the present disclosure. Singular expressions include the plural unless the context clearly indicates otherwise. In this application, expressions such as "includes" or "has" are intended to designate the presence of the features, counts, steps, operations, components, parts, or combinations thereof described, and are not to be understood as precluding the possibility of the presence or addition of one or more other features, counts, operations, components, parts, or combinations thereof.

Unless otherwise defined, all terms used herein, including technical and scientific terms, shall have the same meaning as commonly understood by one of ordinary skill in the art to which the concept of the present disclosure belongs. It is further understood that such terms, as commonly used and as defined in dictionaries, are to be construed to have a meaning consistent with their meaning in the context of the art to which they relate, and are not to be construed in an unduly formal sense unless expressly defined herein.

When an embodiment can be implemented differently, certain processes may be performed in a sequence other than that described. For example, two successively described processes may be performed substantially simultaneously, or in the opposite order from the order described.

In the accompanying drawings, variations in the depicted geometries may be expected, for example, due to manufacturing techniques and/or tolerances. Accordingly, embodiments of the present disclosure should not be construed as limited to the specific geometry of the areas shown herein, and should include, for example, variations in geometry resulting from manufacturing processes. All terms "and/or" used herein include each and every combination of one or more of the components mentioned. Further, as used herein, the term "substrate" may refer to the substrate itself, or to a laminated structure including the substrate and any predetermined layers or films formed on its surface. Further, as used herein, the term "surface of the substrate" may refer to the exposed surface of the substrate itself, or to the outer surface of a predetermined layer or film formed on the substrate.

### First embodiment

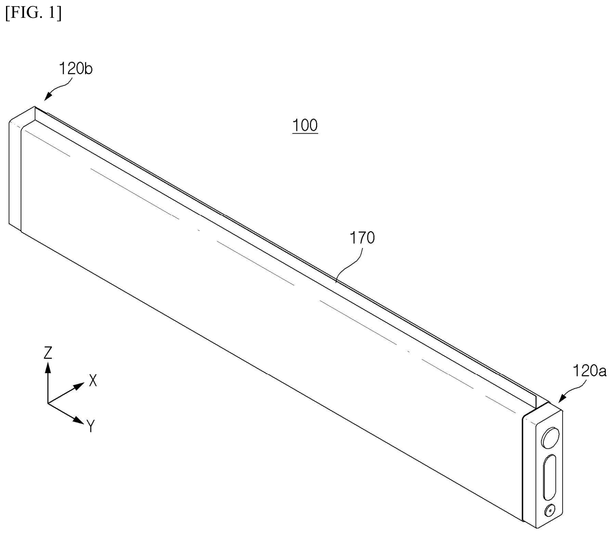

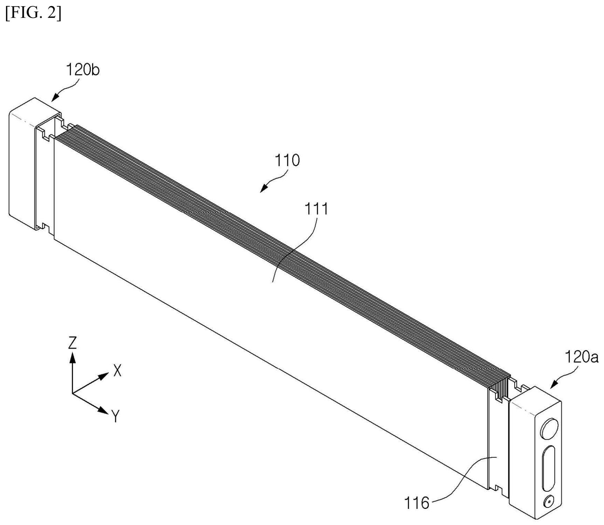

FIG. 1 is a perspective view illustrating an essential part of a secondary battery 100 according to one embodiment of the present disclosure. FIG. 2 is a schematic perspective view illustrating showing the laminate sheet 170 removed from the secondary battery 100 in FIG. 1a.

In the following drawings, the secondary battery 100 is shown as defined in a vertical coordinate system defined by a first direction along the X-axis, a second direction along the Y-axis, and a third direction along the Z-axis, perpendicular to each other, but the first, second, and third directions are not particularly limited and only need to be relatively perpendicular to each other.

Referring to FIGS. 1 and 2, the secondary battery 100 includes a stack-type electrode assembly 110, multifunctional terminal blocks (MTBs) 120a, 120b, and a laminate sheet 170.

The stack-type electrode assembly 110 may include a plurality of unit cells 111 stacked in a first direction (e.g., in the X-axis direction). Each of the unit cells 111 may be an electrode material applied to a metal foil acting as a current collector.

Each of the unit cells 111 may have a thin plate-like body extending in a second direction (e.g., in the Y-axis direction). Each of the unit cells 111 may be a positive electrode unit cell or a negative electrode unit cell. In some embodiments, the plurality of unit cells 111 may be alternating stacks of one positive electrode unit cell and one negative electrode unit cell. The positive electrode unit cells and negative electrode unit cells may be separated from each other by a separator.

In some other embodiments, the plurality of unit cells 111 may be a plurality of positive electrode unit cells and a plurality of negative electrode unit cells stacked alternately. The plurality of positive electrode unit cells and the plurality of negative electrode unit cells may be separated from each other by a separator.

The stack-type electrode assembly 110 may have electrode leads 116 at both ends in the second direction (e.g., in the Y-axis direction). The electrode leads 116 may be electrically connected with electrode tabs of the plurality of unit cells 111. One electrode lead 116 may have one or more electrode tabs connected to it. In some embodiments, more than one electrode tab may be connected to the one electrode lead 116.

In some embodiments, the stack-type electrode assembly 110 may have two electrode leads 116 on one side and two electrode leads 116 on the other side. In this case, half of the plurality of unit cells 111 included in the stack-type electrode assembly 110 may be coupled to the first electrode lead on one side and coupled to the second electrode lead on the other side. The other half of the plurality of unit cells 111 included in the stack-type electrode assembly 110 may be coupled to the third electrode lead on one side and the fourth electrode lead on the other side. However, the present disclosure is not limited to this.

In some embodiments, the stack-type electrode assembly 110 may have one or three or more electrode leads on one side. In some embodiments, the stack-type electrode assembly 110 may have one or three or more electrode leads on the other side.

A first MTB 120a may be provided at one end of the stack-type electrode assembly 110 in the second direction (e.g., in the Y-axis direction) and a second MTB 120b may be provided at the other end. One of the first MTB 120a and the second MTB 120b may be electrically connected to a positive electrode side of the stack-type electrode assembly 110 and the other may be electrically connected to a negative electrode side of the stack-type electrode assembly 110. The second MTB 120b may have substantially the same configuration as the first MTB 120a, differing only in polarity.

The laminate sheet 170 may be configured to wrap around the sides of the stack-type electrode assembly 110. In some embodiments, the laminate sheet 170 may be attached to the sides of the MTBs 120a, 120b to at least partially cover the sides of the MTBs 120a, 120b. In some embodiments, the laminate sheet 170 may cover the entirety of the sides parallel to the second direction (e.g., Y-axis direction) of the MTBs 120a, 120b. In some other embodiments, the laminate sheet 170 may cover only a portion of the sides parallel to the second direction (e.g., Y-axis direction) of the MTBs 120a, 120b.

The first MTB 120a will be described below. While the following description describes the first MTB 120a, one of ordinary skill in the art will recognize the configuration of the second MTB 120b from this description.

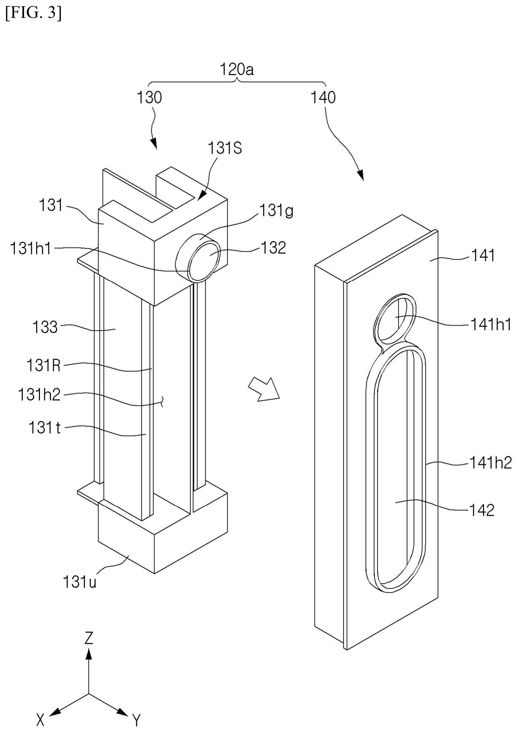

FIG. 3 is a perspective view illustrating the coupling relationship of the first assembly 130 and the second assembly 140 comprising the first MTB 120a in the secondary battery of FIG. 1.

The first MTB 120a may include a first assembly 130 and a second assembly 140.

The first assembly 130 may include an inner housing 131, an electrode terminal part 132 accommodated within the inner housing 131, and a busbar 133 electrically connecting the electrode terminal part 132 and the electrode leads 116.

The inner housing 131 may be made of a non-conductive injection material. The inner housing 131 may define the position of the electrode terminal part 132 and the busbar 133, and may protect the electrode terminal part 132 and the busbar 133 from impact and movement due to external forces.

The inner housing 131 may include a head part 131s, a first through-hole 131h1, a middle body 131t, a second through-hole 131h2, and a bottom part 131u.

The head part 131s constitutes the upper portion of the inner housing 131. The head part 131s may have a predetermined three-dimensional shape.

The first through-hole 131h1 is formed in the head part 131s, into which the electrode terminal part 132 can be inserted. The first through-hole 131h1 may be provided in the head part 131s of the inner housing 131 such that the electrode terminal part 132 is exposed facing the second direction (e.g., Y-axis direction). Thus, the first through-hole 131h1 may be provided in a plane perpendicular to the second direction (e.g., in the Y-axis direction) of the head part 131s. Furthermore, the first through-hole 131h1 may have an opening open to the longitudinal direction of the electrode assembly 110. The shape of the first through-hole 131h1 may be configured to conform to the external shape of the portion where the electrode terminal part 132 is exposed to the outside.

In some embodiments, the head part 131s may include a seal protruding part 131g formed around the first through-hole 131h1. The seal protruding part 131g may be formed around the first through-hole 131h1 and may protrude toward the second direction (e.g., in the Y-axis direction). Thus, when the electrode terminal part 132 is inserted into the first through-hole 131h1, it can surround the periphery of the electrode terminal part 132 and prevent moisture from penetrating between the electrode terminal part 132 and the first through-hole 131h1. Furthermore, it can electrically insulate between the outer housing 141 and the electrode terminal part 132 to be described below.

The middle body 131t constitutes the middle portion of the inner housing 131 and is an upright portion having a predetermined height.

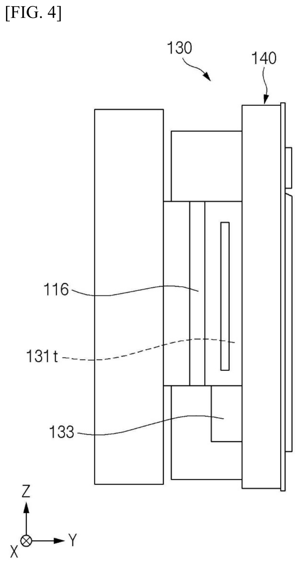

FIG. 4 is a schematic diagram illustrating the first MTB in the secondary battery of FIG. 1, viewed in a first direction (e.g., along the X-axis).

In some embodiments, a side of the middle body 131t may be configured with a support surface. By having a support surface, the middle body 131t can support pressurization forces applied to the busbar 133 and the electrode leads 116 when the busbar 133 and the electrode leads 116 are bonded together (e.g., by laser welding).

In some embodiments, a second through-hole 131h2 may be formed in the middle body 131t. The second through-hole 131h2 may be provided in a plane perpendicular to the second direction of the middle body 131t (e.g., in the Y-axis direction). Further, the second through-hole 131h2 may have an opening open to the longitudinal direction of the electrode assembly 110. The second through-hole 131h2 may comprise a space for heat, gas, or the like to be discharged.

In some embodiments, the second through-hole 131h2 may be provided with a shield 131k. The shield 131k may be a predetermined elongate beam extending across or longitudinally within the second through-hole 131h2. The shield 131k may partially block the discharge of hot particles in the event of thermal runaway. Thus, the possibility of a flame may be reduced.

The second through-hole 131h2 may communicate with a venting hole 141h2 in the outer housing 141 of the second assembly 140, and a rupture disk 142 that is coupled to the venting hole 141h2.

The bottom part 131u constitutes a lower part of the inner housing 131. The bottom part 131u may support the busbar 133 and electrode leads connected to the busbar 133 from below. The bottom part 131u may block heat transfer such that heat transferred through the busbar 133 and electrode leads is not transferred to the lower part.

The electrode terminal part 132 is accommodated within the inner housing 131 and may be exposed through the first through-hole 131h1. The electrode terminal part 132 may be made of a metal or metal alloy having a low electrical resistance, for example, copper (Cu), aluminum (Al), nickel (Ni), iron (Fe), platinum (Pt), manganese (Mn), or an alloy containing one or more of the foregoing.

In some embodiments, the exposed surface on which the electrode terminal part 132 is exposed facing outward from the inner housing 131 may be a plane. In some embodiments, the exposed surface may have a plane extending perpendicular to the second direction (e.g., in the Y-axis direction).

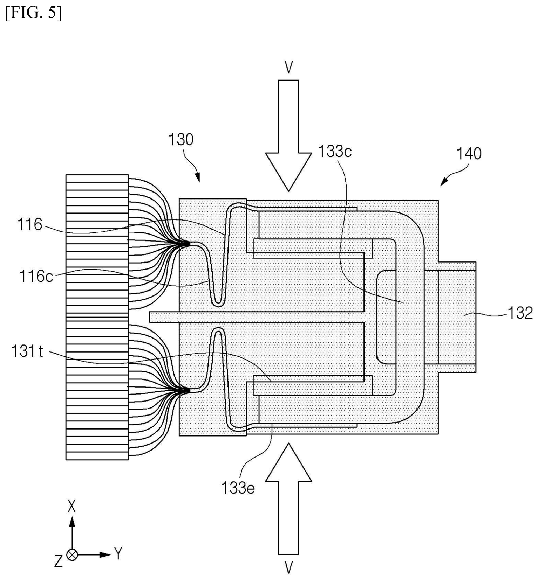

FIG. 5 is a schematic diagram illustrating a cross-section of the first MTB 120a cut through the electrode terminal part 132 and cut as a plane perpendicular to a third direction (e.g., the Z-axis direction).

Referring to FIG. 5, the busbar 133 may be provided to be in contact with the electrode terminal part 132. The busbar 133 may be made of a metallic material having a low electrical resistance. In some embodiments, the busbar 133 may be made of copper (Cu), nickel (Ni), aluminum (Al), iron (Fe), cobalt (Co), platinum (Pt), molybdenum (Mo), tin (Sn), palladium (Pd), or an alloy containing one or more of the foregoing. The busbar 133 may have a cross-sectional area capable of meeting the allowable current of the busbar 133.

The busbar 133 may be configured to be in contact with the electrode leads 116 of the stack-type electrode assembly 110. In some embodiments, the busbar 133 may be coupled to the electrode leads 116 by laser welding. In some embodiments, the busbar 133 may be coupled to the electrode leads 116 by fasteners, such as rivets.

In some embodiments, the busbar 133 may include a plane-shaped center part 133c extending horizontally in the first direction (e.g., in the X-axis direction) and an edge part 133e bent and extending from the center part 133c. The center part 133c may be configured to form a substantially U-shaped cross-sectional shape together with the edge part 133e and may extend in the third direction (e.g., in the Z-axis direction). In some embodiments, the edge part 133e may have a plane extending perpendicular to the first direction (e.g., in the X-axis direction).

The busbar 133 may be in contact with the electrode terminal part 132 at the center part 133c. The busbar 133 may be in contact with the electrode leads 116 at the edge part 133e.

As previously described, in some embodiments, the inner housing 131 may include a middle body 131t having support surfaces on its sides. As such, with the middle body 131t provided, when the busbar 133 and the electrode leads 116 are bonded together (e.g., laser welded), the middle body 131t can support the pressurizing force (arrow V in FIG. 5) applied to the busbar 133 and the electrode leads 116.

In some embodiments, the electrode leads 116 may include a pre-bended portion 116c that is bent at a portion not in contact with the busbar 133. The pre-bended portion 116c may prevent stresses from being concentrated in certain areas of the electrode leads 116 by external forces applied to the stack-type electrode assembly 110, which may result in increased safety.

Referring again to FIG. 3, the second assembly 140 is described as follows.

The second assembly 140 may include an outer housing 141, and a rupture disk 142 coupled to the outer housing 141.

The outer housing 141 may be made of a relatively high stiffness material, such as metal, and defines the appearance of the first MTB 120a. In some embodiments, the outer housing 141 may be made of aluminum (Al), nickel (Ni), iron (Fe), cobalt (Co), chromium (Cr), manganese (Mn), or an alloy containing one or more of the foregoing.

In some embodiments, the outer housing 141 may include a terminal hole 141h1.

The terminal hole 141h1 is a portion through which an electrode terminal part 132 included in the first assembly 130 may be exposed when the first assembly 130 and the second assembly 140 are coupled. The terminal hole 141h1 may be provided in an upper portion of the outer housing 141 such that the electrode terminal part 132 is exposed facing the second direction (e.g., Y-axis direction). Thus, the terminal hole 141h1 may be provided in a plane perpendicular to the second direction (e.g., Y-axis direction) of the outer housing 141. The shape of the terminal hole 141h1 may be configured to conform to the external shape of the portion where the electrode terminal part 132 is exposed to the outside, but spaced apart from the electrode terminal part 132.

In some embodiments, as described above, the inner housing 131 is provided with a seal protruding part 131g, which can space apart the electrode terminal part 132 and the inner circumferential portion of the terminal hole 141h1. Thus, the electrode terminal part 132 and the outer housing 141 may be electrically insulated from each other.

In some embodiments, the outer housing 141 may include a venting hole 141h2.

The venting holes 141h2 may be provided in a plane perpendicular to the second direction of the outer housing 141 (e.g. in the Y-axis direction). The shape of the venting holes 141h2 may be configured to conform to the shape of the rupture disk 142 described hereinafter.

The venting hole 141h2 may be in communication with the second through-hole 131h2.

In some embodiments, the outer housing 141 may be coupled to the inner housing 131 in a manner that surrounds at least a portion of the inner housing 131. That is, the. outer housing 141 may have a coupling structure that surrounds at least a portion of a first direction (e.g., X-axis direction) and a second direction (e.g., Y-axis direction) of the inner housing 131. As the outer housing 141 is coupled to the inner housing 131, the rigidity of the first MTB 120a is complemented, and the outer housing 141 may have a modular form with a gas venting structure, an electrolyte inlet, a valve, and the like, which is advantageous for configuring a battery pack due to the high degree of freedom and compatibility, and can implement improved safety.

In some embodiments, the outer housing 141 and the inner housing 131 are coupled to each other via a PP layer or adhesive material, a welded structure, or the like. Thus, moisture and foreign matter may be prevented from penetrating into the interior of the first MTB 120a.

In some embodiments, the first MTB 120a may include a rupture disk 142 configured to rupture in the event of an excessive increase in internal pressure of the secondary battery 100, thereby discharging the gases responsible for the excessively elevated internal pressure. The rupture disk 142 may not be restored to its original state if it ruptures due to a thermal event occurring within the interior of the secondary battery 100. The rupture disk 142 may be any rupture disk known in the art and is not particularly limited.

The venting hole 141h2 and the rupture disk 142 may have a predetermined area. By having a predetermined area of the venting hole 141h2 and the rupture disk 142, an adequate venting area can be secured in the event of rupture of the rupture disk 142 and thermal runaway due to a thermal event occurring inside the secondary battery 100.

In some embodiments, the first MTB 120a may further include a check valve (not shown). The check valve (not shown) may be configured to open to discharge gases within the secondary battery 100 when the internal pressure of the secondary battery 100 increases above a predetermined pressure, and to close again when the internal pressure is relieved by the discharge of the gases. The check valve (not shown) may be restored to its original state after discharging the gas inside, since there is no part that is ruptured by the discharge of the gas.

In some embodiments, the first MTB 120a may further include an electrolyte inlet (not shown) into which the electrolyte can be injected. In some embodiments, the electrolyte inlet (not shown) may be provided on only one of the first MTB 120a and the second MTB 120b.

The electrolyte injected through the electrolyte inlet (not shown) may be any electrolyte conventionally used for lithium secondary batteries, and is not particularly limited.

Since the secondary battery 100 of the present disclosure accommodates units with respective functions within the MTBs 120a, 120b, such as the electrode terminal part 132, the busbar 133, the rupture disk 142, the check valve (not shown), the electrolyte inlet (not shown), and the like, the battery cell itself has a function equivalent to a conventional battery module. Thus, the secondary battery 100 of the present disclosure can have a high degree of freedom and compatibility, and is advantageous for cell-to-pack implementation.

### Second embodiment

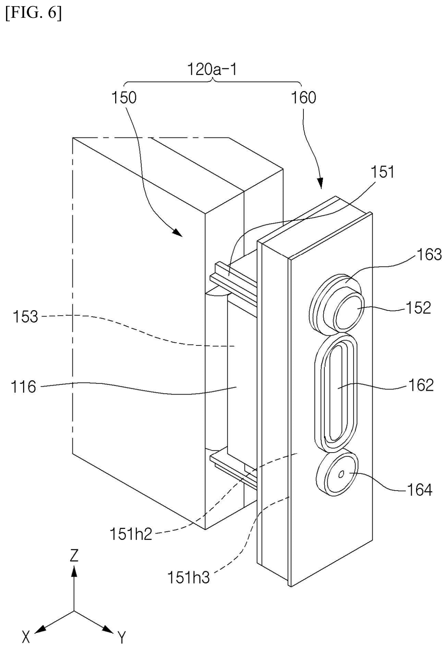

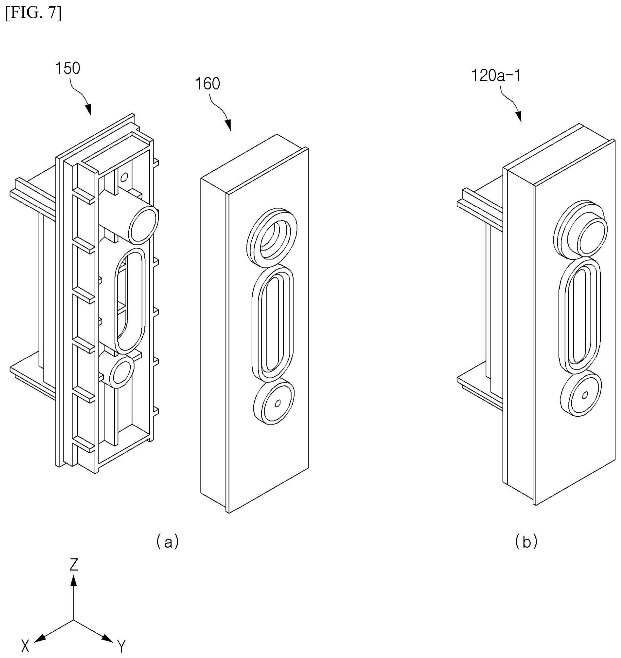

FIG. 6 is a perspective view illustrating an essential part of the secondary battery 100a according to another embodiment of the present disclosure. FIG. 7 is a partial perspective view illustrating a separation-coupling structure of a portion of the secondary battery 100a of FIG. 6.

The secondary battery 100a includes a first MTB 120a-1, wherein the inner housing 151 of the first assembly 150 includes a front body 151a and a rear body 151b, wherein the front body 151a further includes a third through-hole 151h3 formed in addition to a first through-hole 151h1 and a second through-hole 151h2. The second assembly 160 further includes a seal member 163 and a check valve 164, and differs from the first embodiment described with reference to FIGS. 1 to 5 in that a valve hole 161h3 is further formed in the outer housing 161 in addition to the terminal hole 161h1 and the venting hole 161h2. Therefore, the following description will focus on these differences and omit further description of overlapping portions.

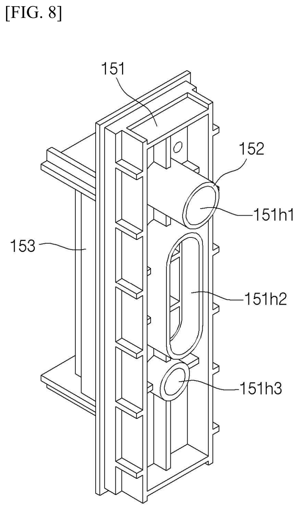

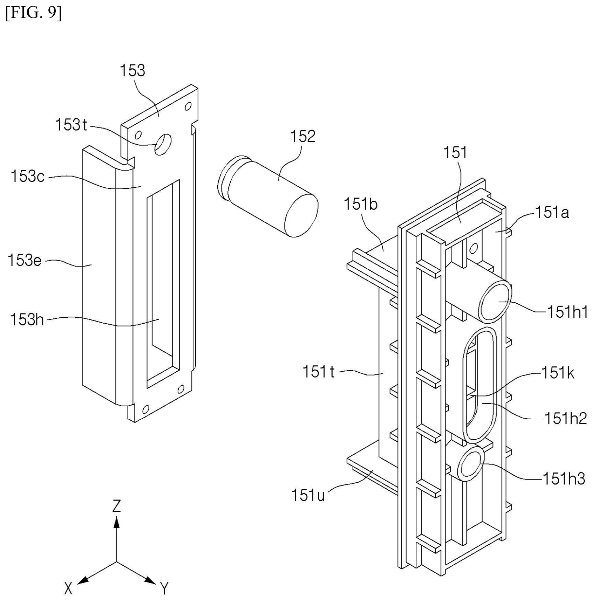

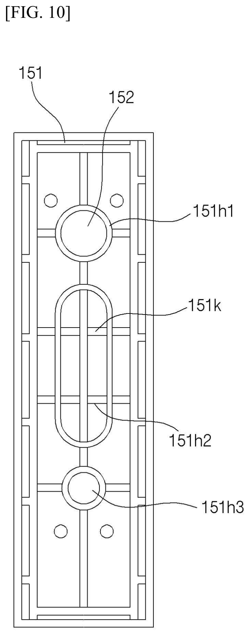

FIG. 8 is a diagram illustrating the first assembly 150 of the secondary battery 100a of the second embodiment, FIG. 9 is a diagram illustrating a separation structure of the first assembly 150 of the secondary battery 100a of the second embodiment, and FIG. 10 is a diagram illustrating the first assembly 150 of the secondary battery 100a of the second embodiment viewed in a second direction (e.g., front along the Y-axis).

The first assembly 150 of the second embodiment may include an inner housing 151, an electrode terminal part 152 accommodated within the inner housing 151, and a busbar 153 electrically connecting the electrode terminal part 152 and the electrode leads 116.

The inner housing 151 may include a front body 151a and a rear body 151b.

The front body 151a constitutes a front (e.g., front in the Y-axis direction) main body of the inner housing 151.

The first to third through-holes 151h1, 151h2, 151h3 penetrate the front body 151a in a second direction (e.g., in the Y-axis direction).

The first through-hole 151h1 corresponds to the first through-hole 131h1 described in the first embodiment as a portion into which the electrode terminal part 152 can be inserted. The first through-hole 151h1 may be provided in the front body 151a such that the electrode terminal part 152 is exposed facing the second direction (e.g., in the Y-axis direction). Thus, the first through-hole 151h1 may be provided in a plane perpendicular to the second direction (e.g., Y-axis direction) of the front body 151a.

The second through-hole 151h2 may be provided in a plane perpendicular to the second direction of the front body 151a (e.g., in the Y-axis direction). Further, the second through-hole 151h2 may have an opening open to the longitudinal direction of the electrode assembly 110.

In some embodiments, the second through-hole 151h2 may be provided with a shield 151k. The shield 151k may be a predetermined elongate beam extending across or longitudinally within the second through-hole 151h2. The shield 151k may partially block the discharge of hot particles in the event of thermal runaway. Thus, the possibility of a flame may be reduced.

The third through-hole 151h3 may be provided in a plane perpendicular to the second direction of the front body 151a (e.g., in the Y-axis direction). Further, the second through-hole 151h2 may have an opening open to the longitudinal direction of the electrode assembly 110. The shape of the third through-hole 151h3 may be configured to conform to the shape of at least a portion of the check valve 164 described hereinafter.

The rear body 151b constitutes a rear (e.g., rearward in the Y-axis direction) main body of the inner housing 151.

The rear body 151b may include a rear middle body 151t and a rear bottom part 151u.

The rear middle body 151t is an upright portion having a predetermined height. The sides of the rear middle body 151t can support pressurizing forces applied to the busbar 153 and the electrode leads 116 when the busbar 153 and the electrode leads 116 are bonded together (e.g., laser welded).

The rear bottom part 151u constitutes a lower portion of the rear body 151b. The rear bottom part 151u may support the busbar 153 and electrode leads connected to the busbar 153 from below. The rear bottom part 151u may block heat transfer such that heat transferred through the busbar 153 and the electrode leads does not transfer to the lower part.

The busbar 153 may be configured to be in contact with the electrode leads 116 of the stack-type electrode assembly 110.

In some embodiments, the busbar 153 may include a plane-shaped center part 153c extending horizontally in the first direction (e.g., in the X-axis direction) and an edge part 153e bent and extending from the center part 153c. The busbar 153 may be in contact with the electrode terminal part 152 at the center part 153c. The busbar 153 may be in contact with the electrode leads 116 at the edge part 153e.

In some embodiments, the busbar 153 may include a first bus hole 153t. The first bus hole 153t may be a hole penetrating through the center part 153c in a second direction (e.g., in the Y-axis direction). The first bus hole 153t may be a portion that connects with the electrode terminal part 152.

In some embodiments, the busbar 153 may include a second bus hole 153h. The second bus hole 153h may be a hole penetrating through the center part 153c in the second direction (e.g., in the Y-axis direction). The second bus hole 153h may be located in the same line as the second through-hole 151h2 in the second direction (e.g., in the Y-axis direction). The second bus hole 153h, together with the second through-hole 151h2, may function as a discharge passage for heat and gases.

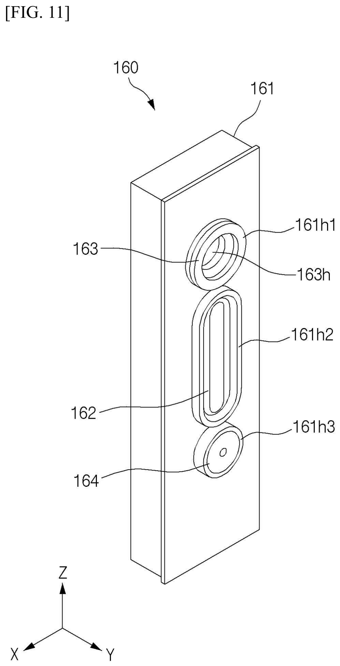

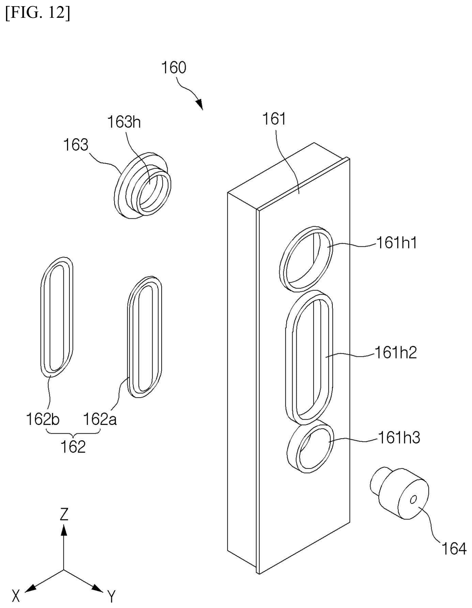

FIG. 11 is a diagram illustrating a second assembly 160 of a second embodiment, and FIG. 12 is a diagram illustrating a separation structure of the second assembly 160.

The second assembly 160 of the second embodiment may include a seal member 163 and a check valve 164 in addition to an outer housing 161 and a rupture disk 162 coupled to the outer housing 161.

Meanwhile, in some embodiments, the rupture disk 162 may include a venting cover 162a and a venting insulation 162b coupled to the venting cover 162a. However, the rupture disk 162 may have any configuration.

The outer housing 161 may have a configuration in which the valve hole 161h3 is further formed to the first embodiment described above.

The valve hole 161h3 is a portion through which a check valve 164 connecting to a third hole in the first assembly 150 may be exposed when the first assembly 150 and the second assembly 160 are coupled. The valve hole 161h3 may be provided in a lower portion of the outer housing 161 such that the check valve 164 is exposed facing the second direction (e.g., Y-axis direction). The valve hole 161h3 may conform to an external shape of the portion where the check valve 164 is exposed to the outside.

In some embodiments, the second assembly 160 may include a seal member 163. The seal member 163 may be inserted into the terminal hole 161h1 of the outer housing 161. The seal member 163 may be configured in the form of a ring with seal holes 163h, and the electrode terminal part 152 may be positioned within the seal holes 163h of the seal member 163. The seal member 163 may be made of an insulating material and may electrically isolate the electrode terminal part 152 from the outer housing 161.

The seal member 163 can seal between the periphery of the electrode terminal part 152 and the terminal hole 161h1 of the outer housing 161. Thus, moisture can be prevented from penetrating into the gap between the terminal hole 161h1 and the electrode terminal part 152.

In some embodiments, the second assembly 160 may include a check valve 164. The check valve 164 may have any configuration, such as a configuration including a predetermined membrane. The check valve 164 may be configured to open to discharge gases within the secondary battery 100 when the internal pressure of the secondary battery 100 increases above a predetermined pressure, and to close again when the internal pressure is relieved by the discharge of the gases. The check valve 164 may be restored to its original state after discharging the internal gas, as there is no part of the check valve 164 that is ruptured by the discharge of the gas.

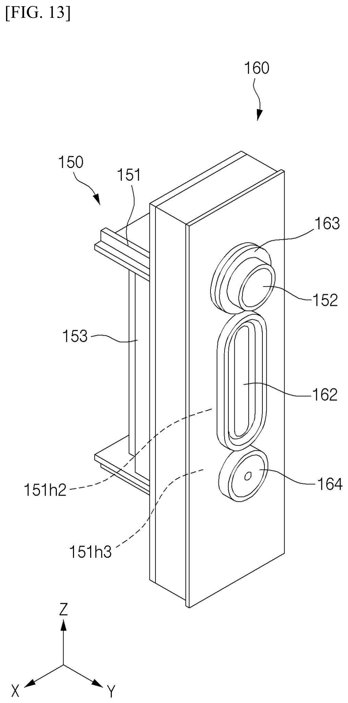

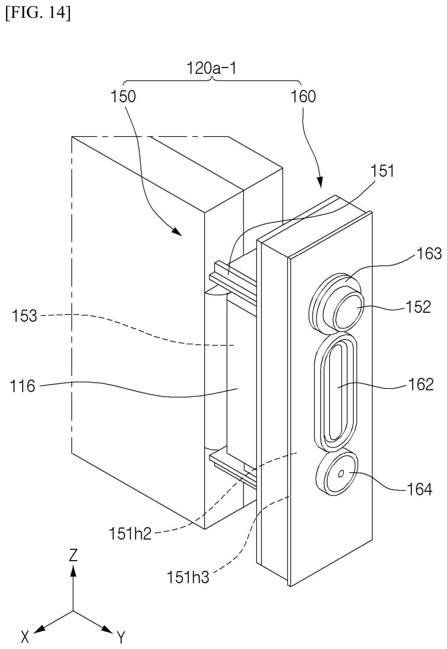

FIGS. 13 and 14 are diagrams illustrating the first assembly 150 and second assembly 160 coupled together.

In some embodiments, the outer housing 161 may be coupled to the inner housing 151 such that it surrounds at least a portion of the inner housing 151. Thus, the rigidity of the first MTB 120a may be supplemented and moisture may be prevented from penetrating into the interior of the first MTB 120a.

Although embodiments of the present disclosure have been described in detail above, one of ordinary skill in the art to which present the disclosure belongs will be able to make many modifications to the present disclosure without departing from the spirit and scope of the present disclosure as defined in the appended claims. Accordingly, future modifications of the present disclosure will not depart from the technology of the present disclosure.

## Claims

1. A secondary battery comprising:
a stack-type electrode assembly including a plurality of unit cells stacked in a first direction, and having electrode leads at both ends in a second direction perpendicular to the first direction;
a multifunctional terminal block (MTB) at both ends of the stack-type electrode assembly; and
a laminate sheet wrapping around the sides of the stack-type electrode assembly,
wherein the MTB comprises:
a first assembly comprising an inner housing, and an electrode terminal part accommodated in the inner housing and electrically connected to the electrode leads of the stack-type electrode assembly; and
a second assembly comprising an outer housing wrapping around at least a portion of the first assembly, and a rupture disk which is coupled to the outer housing and is configured to rupture to release gas upon an increase in internal pressure.

2. The secondary battery of claim 1, wherein the inner housing comprises:
a second through-hole in communication with the rupture disk.

3. The secondary battery of claim 2, wherein a shield is within the second through-hole.

4. The secondary battery of claim 1, wherein the MTB further comprises a busbar electrically connecting the electrode leads of the stack-type electrode assembly with the electrode terminal part.

5. The secondary battery of claim 4, wherein the inner housing comprises a middle body, wherein the middle body supports a bonding between the electrode lead and the busbar.

6. The secondary battery of claim 4, wherein the inner housing comprises a bottom part, wherein the bottom part is below the busbar and is configured to prevent downward heat transfer.

7. The secondary battery of claim 1, wherein the inner housing comprises an insulating material, and the outer housing comprises a metallic material.

8. The secondary battery of claim 1, wherein
the outer housing includes a terminal hole, wherein the electrode terminal part is exposed to outside through the terminal hole in the outer housing.

9. The secondary battery of claim 1, wherein the MTB further comprises a check valve, and the check valve is configured to open to discharge internal gases when the internal pressure of the secondary battery is above a specific pressure, and to close again after the internal pressure is relieved.

10. The secondary battery of claim 1, wherein the MTB further comprises an electrolyte inlet configured to receive electrolyte injected therethrough.

11. A secondary battery comprising:
a stack-type electrode assembly including a plurality of unit cells stacked in a first direction, and having electrode leads at both ends in a second direction perpendicular to the first direction;
a multifunctional terminal block (MTB) at both ends of the stack-type electrode assembly; and
a laminate sheet that wraps around the sides of the stack-type electrode assembly, wherein
the MTB comprises:
a first assembly comprising an inner housing, and an electrode terminal part accommodated in the inner housing and electrically connected to the electrode leads of the stack-type electrode assembly; and
a second assembly comprising an outer housing wrapping around at least a portion of the first assembly, and a check valve coupled to the outer housing,
wherein the check valve is configured to open to discharge internal gases when an internal pressure of the secondary battery is above a specific pressure, and to close again after the internal pressure is relieved.

12. The secondary battery of claim 11, wherein the second assembly further comprises:
a seal member coupled to the outer housing and sealing a periphery of the electrode terminal part.

13. The secondary battery of claim 11, wherein the second assembly further comprises:
a rupture disk which is coupled to the outer housing and is configured to rupture to release gas upon an increase in internal pressure.

14. The secondary battery of claim 12, wherein the inner housing comprises:
a second through-hole in communication with the rupture disk.

15. The secondary battery of claim 14, wherein
a shield is within the second through-hole.
